# EUROPÄISCHE PATENTSCHRIFT

(11) **EP 3 694 906 B1**
(45) Veröffentlichungstag und Bekanntmachung des Hinweises auf die Patenterteilung: **13.03.2024**
(21) Anmeldenummer: 17791992.5
(22) Anmeldetag: 13.10.2017
(51) Int. Cl.: C08G 77/04, C08L 83/04

(54) **MISCHUNGEN VON MD-METHYLPOLYSILOXANEN ALS WÄRMETRÄGERFLUID**
MIXTURES OF MD-METHYLPOLYSILOXANES AS HEAT CARRIER FLUID
MÉLANGES DE MD-MÉTHYLPOLYSILOXANES UTILISÉS COMME FLUIDE CALOPORTEUR

(43) Veröffentlichungstag der Anmeldung: 19.08.2020
(73) Patentinhaber: Wacker Chemie AG, 81737 München (DE)
(72) Erfinder: DÖRRICH, Steffen, 81827 München (DE); SCHAFFER, Erich, 5122 Duttendorf (AT); WEIDNER, Richard, 84489 Burghausen (DE); VOIT, Harald, 84571 Reischach (DE)
(74) Vertreter: Mai, Marit
(86) Internationale Anmeldenummer: PCT/EP2017/076258
(87) Internationale Veröffentlichungsnummer: WO 2019/072403

(56) Entgegenhaltungen:
- WO-A1-2014/001081
- US-A- 3 694 405

## Beschreibung

Die vorliegende Erfindung betrifft Methylpolysiloxan-Mischungen, mit einem molaren M:D-Verhältnis von 1:5,5 bis 1:15 und 25 bis 55 Massen-% cyclischen Methylpolysiloxanen, sowie deren Verwendung als Wärmeträgerfluid.

Organosiloxane, insbesondere Methylpolysiloxan-Mischungen finden auf Grund ihrer hohen thermischen Stabilität, ihres weiten Flüssigkeitsbereiches und der geringen Temperaturabhängigkeit ihrer Viskosität häufig Anwendung als Wärmeträgerfluid. WO 2014/001081 beschreibt Methylpolysiloxan-Mischungen, die als Wärmeträgerfluide für hohe Temperaturen (HTF) geeignet sind. Das Zahlenverhältnis der Me₃Si-Kettenendgruppen (M) zur Summe aus Me₂SiO-Einheiten (D) beträgt in den Methylpolysiloxan-Mischungen mindestens 1:2 und höchstens 1:10.

Messungen haben ergeben, dass Methylpolysiloxan-Mischungen mit einem M:D Verhältnis von 1:4, die aktuell als HTF eingesetzt werden unterhalb der angestrebten maximalen Betriebstemperatur von 425°C in den überkritischen Zustand übergehen. Das hat negative Auswirkung auf die Performance des HTFs, da die Wärmetransporteigenschaften des HTFs durch den Übergang in den überkritischen Bereich schlechter werden. So bricht beispielsweise die Wärmekapazität oder auch die Dichte ein. Tabelle 1 zeigt, dass zwischen 399,6 und 450°C die Dichte durch den Übergang in den überkritischen Zustand einbricht.

**Tabelle 1: Dichteverlauf von äquilibrierter Methylpolysiloxan-Mischung mit M:D = 1:4 (Fettdruck = nicht überkritisch; Normaldruck = überkritisch)**

| T[°C] | ρ [g/cm³] |
|---|---|
| 27,4 | **0,9097** |
| 49,7 | **0,8914** |
| 99,9 | **0,8424** |
| 149,7 | **0,7961** |
| 199,8 | **0,7463** |
| 250,8 | **0,6963** |
| 299,7 | **0,6334** |
| 350,1 | **0,5465** |
| 399,6 | **0,4299** |
| 450,0 | 0,1999 |

US3694405, Beispiel 17 beschreibt die Äquilibrierung einer Methylpolysiloxan-Mischung mit einem molaren M:D-Verhältnis von 1:5,3.

Gegenstand der Erfindung ist eine Methylpolysiloxan-Mischung, die Methylpolysiloxane mit Me₃Si-Kettenendgruppen (M) und Me₂SiO-Einheiten (D) aufweist, wobei das molare M:D-Verhältnis in der Methylpolysiloxan-Mischung 1:5,5 bis 1:15 beträgt und die Summe der Anteile aller cyclischen Methylpolysiloxane 25 bis 55 Massen-% beträgt.

Ursächlich für die Lage des kritischen Punktes einer Methylpolysiloxan-Mischung ist die molekulare Zusammensetzung. Methylpolysiloxane mit niedrigerer molarer Masse, insbesondere lineare Methylpolysiloxane MM (Si2), MDM (Si3), MDDM (Si4), etc... und cyclische Methylpolysiloxane D3, D4, D5, etc gehen bei niedrigerer Temperatur in den überkritischen Zustand über (siehe Tabelle 2).

**Tabelle 2: Ausgewählte Reinstoffdaten linearer und cyclischer Siloxane (Datenbank ASPEN DB-PURE28) (bis Si8 und bis D8 liegt die kritische Temperatur unterhalb der angestrebten Betriebstemperatur des Wärmeträgeröls von 425°C)**

| **Si-** | | **2** | **4** | **6** | **8** | **12** |
|---|---|---|---|---|---|---|
| Kritische Temperatur | [°C] | 245,8 | 326,3 | 380,05 | 415,8 | 478,2 |

| **D-** | | **3** | **4** | **5** | **6** | **8** |
|---|---|---|---|---|---|---|
| Kritische Temperatur | [°C] | 281,1 | 313,4 | 346,0 | 372,7 | 416,1 |

Unter thermischer Belastung lagern lineare endgestopperte Methylpolysiloxane um, sie äquilibrieren. Unabhängig von der Ausgangszusammensetzung ergibt sich eine Methylpolysiloxan-Mischung aus linearen Siloxanen (Si2, Si3, Si4, etc...) und cyclischen Siloxanen (D3, D4, D5, etc...), die im thermischen thermodynamischen Gleichgewicht liegt. Die Lage des thermischen Gleichgewichts ergibt sich aus der maximalen Betriebstemperatur, der das Methylpolysiloxan ausgesetzt ist, und des molaren M:D-Verhältnisses der Methylpolysiloxan-Mischung. Die Lage des Gleichgewichts hängt von der Temperatur ab. Bei hohen Temperaturen, wie beispielsweise 425°C stellt sich das Gleichgewicht innerhalb von 1-2 Monaten (Dauerbelastung) ein. Bei niedrigeren Temperaturen stellt sich ein anderes Gleichgewicht ein; bei 400°C dauert die Gleichgewichtseinstellung allerdings schon 2-4 Monate. Daher stellt sich im realen Betrieb für ein Wärmeträgerfluid, insbesondere im CSP-Kraftwerksbetrieb nach einiger Zeit immer das Gleichgewicht der höchsten maximalen Betriebstemperatur ein, da die Geschwindigkeitskonstante zur Einstellung des Gleichgewichts bei höherer Temperatur größer ist als die Geschwindigkeitskonstante zur Einstellung des Gleichgewichts bei niedrigerer Temperatur (entspricht Rückreaktion/Rückäquilibrierung). Zudem ist die Verweilzeit des Wärmeträgeröls im realen CSP-Kraftwerksbetrieb bei maximaler Betriebstemperatur höher (Receiverende bis Verdampfer), und im Verdampfer wird das Wärmeträgeröl sehr schnell auf 300°C abgekühlt. Bei 300°C findet die Äquilibrierung nur noch extrem langsam statt.

Überraschenderweise wurde gefunden, dass eine erfindungsgemäße Methylpolysiloxan-Mischung mit einem molaren M:D-Verhältnis von 1:5,5 bis 1:15, vorzugsweise 1:5,6 bis 1:10,5, insbesondere 1:5,8 bis 1:9, im äquilibrierten Zustand eine Zusammensetzung aufweist (siehe Tabelle 3), dass sie bis 425°C nicht in den überkritischen Zustand übergeht (siehe Tabelle 4).

In einer bevorzugten Ausführungsform werden 46 bis 65 Massen-%, vorzugsweise 50 bis 60 Massen-%, insbesondere 52 bis 58 Massen-% der Methylpolysiloxane in der Methylpolysiloxan-Mischung ausgewählt aus Methylpolysiloxanen Six mit x>8 und Dy mit y>8.

Aufgrund der oben beschriebenen Probleme beim Übergang in den überkritischen Zustand ist es bei Anwendung von Methylpolysiloxanen als Wärmeträgeröl bei einer gewünschten Anwendungstemperatur von 425°C sinnvoll nur Methylpolysiloxane mit einem molaren M:D-Verhältnis von mindestens 1:5,5, vorzugsweise 5,6, insbesondere 5,8 zu verwenden. Zudem sollten aus anwendungstechnischer Sicht auch keine Methylpolysiloxane mit zu hohem molaren M:D-Verhältnis verwendet werden, da damit die durchschnittliche Kettenlänge des Wärmeträgerfluides und damit auch die Viskosität steigt. Das hat auf den Betrieb einer Wärmeträgeranlage negative Auswirkungen, da dadurch u.a. der Umlauf des Wärmeträgerfluides nur mit höherer Pumpleistung erbracht werden kann. Zudem ist bekannt und in DE102014209670 und DE102015202158 beschrieben, dass die Lebensdauer eines Si-HTFs durch die Bildung von trifunktionellen Siloxaneinheiten, sogenannten T-Einheiten determiniert ist. Durch die gebildeten Verzweigungen vernetzen sich die Moleküle des HTFs, wodurch die Viskosität des Si-HTFs ansteigt und schließlich nicht mehr pumpbar ist. Je längerkettig bzw. hochmolekularer ein MD-Si-HTF (d.h. je größer das molare M:D-Verhältnis ist) ist, desto weniger verzweigende T-Einheiten müssen thermisch gebildet werden, um die HTF Moleküle untereinander zu vernetzen. Daher ist die sinnvolle, wirtschaftliche Verwendung von hochtemperatur Si-HTFs auf ein maximales molares M:D-Verhältnis von 1:15 begrenzt.

Der mit den Massenanteilen gewichtete arithmetische Mittelwert (vorzugsweise bestimmt analog unten beschriebener gaschromatographischer Methode) von x über alle linearen Methylpolysiloxane (Six) von Si2 bis Si22 liegt bevorzugt zwischen 2,3 und 3,6, besonders bevorzugt zwischen 2,5 und 3,5.

Der mit den Massenanteilen gewichtete arithmetische Mittelwert (vorzugsweise bestimmt analog unten beschriebener gaschromatographischer Methode) von y über alle cyclischen Methylpolysiloxane (Siy) von D3 bis D17 liegt bevorzugt zwischen 1,7 und 3,5, besonders bevorzugt zwischen 1,9 und 3, 1.

Vorzugsweise beträgt die Summe der Anteile (vorzugsweise bestimmt analog unten beschriebener gaschromatographischer Methode) aller cyclischen Methylpolysiloxane mindestens 26 Massen-% und höchstens 50 Massen-%, besonders bevorzugt mindestens 27 Massen-% und höchstens 32 Massen-%.

Die Viskosität der erfindungsgemäßen Methylpolysiloxan-Mischung bei 25°C ist bevorzugt unter 50 mPa*s, besonders bevorzugt unter 20 mPa*s, ganz besonders bevorzugt zwischen 5 und 15 mPa*s.

Die erfindungsgemäße Methylpolysiloxan-Mischung kann in einer monomodalen, bimodalen oder multimodalen Verteilung (bestimmt analog unten beschriebener gaschromatographischer Methode und nach Retentionszeiten aufgetragen) vorliegen, gleichzeitig kann die Verteilung eng oder breit sein. Vorzugsweise weist die erfindungsgemäße Methylpolysiloxan-Mischung eine bimodale, trimodale oder multimodale Verteilung auf. Besonders bevorzugt weist die Methylpolysiloxan-Mischung bei 425°C eine multimodale Verteilung auf. Betrachtet man die Verteilung der linearen Siloxane und der cyclischen Siloxane jeweils getrennt ergibt sich jeweils eine monomodale Verteilung.

Die erfindungsgemäße Methylpolysiloxan-Mischung enthält bevorzugt weniger als 500 ppm Wasser, besonders bevorzugt weniger als 200 ppm Wasser, ganz besonders bevorzugt weniger als 50 ppm Wasser, jeweils bezogen auf die Masse.

Erfindungsgemäße Methylpolysiloxan-Mischung kann hergestellt werden, indem Methylpolysiloxane Six oder Dy oder beliebige Gemische von solchen Methylpolysiloxanen in jedweder Reihenfolge zubereitet, gemischt und zueinander dosiert werden, gegebenenfalls auch mehrfach wiederholend, gegebenenfalls auch abwechselnd oder gleichzeitig. Durch geeignete Verfahren, beispielsweise Destillation, können Methylpolysiloxane oder Methylpolysiloxan-Gemische auch wieder entfernt werden. Die Zusammensetzung der erfindungsgemäßen Methylpolysiloxan-Mischung wird dabei durch die eingesetzten oder entfernten Mengen von Methylpolysiloxaen Six und Dy gesteuert.

Das Verfahren kann bei Raumtemperatur und Umgebungsdruck durchgeführt werden, aber auch bei erhöhter oder erniedrigter Temperatur sowie erhöhtem oder erniedrigtem Druck.

Erfindungsgemäße Methylpolysiloxan-Mischungen können weiterhin hergestellt werden, indem geeignete Chlorsilane, Alkoxysilane oder Gemische von Chlorsilanen oder Alkoxysilanen hydrolysiert oder cohydrolysiert und anschließend von Nebenprodukten wie Chlorwasserstoff oder Alkoholen sowie gegebenenfalls von überschüssigem Wasser befreit werden. Optional kann zu der erhaltenen Methylpolysiloxan-Mischung weiteres Methylpolysiloxan hinzugefügt oder durch geeignete Verfahren, beispielsweise Destillation, entfernt werden. Das Verfahren kann bei Raumtemperatur und Umgebungsdruck durchgeführt werden, aber auch bei erhöhter oder erniedrigter Temperatur sowie erhöhtem oder erniedrigtem Druck. Die Zusammensetzung der erfindungsgemäßen Methylpolysiloxan-Mischung wird dabei durch das Verhältnis der eingesetzten und gegebenenfalls wieder entfernten Mengen von Silanen beziehungsweise Methylpolysiloxanen gesteuert.

Erfindungsgemäße Methylpolysiloxan-Mischungen können außerdem hergestellt werden, indem reine Methylpolysiloxane Six und Dy oder beliebige Gemische von solchen Methylpolysiloxanen auf Temperaturen erhitzt werden, bei denen die erwähnten Umlagerungsprozesse stattfinden, so dass Methylpolysiloxan-Mischungen mit veränderter Zusammensetzung erhalten werden. Diese Zusammensetzung kann der Gleichgewichtszusammensetzung bei dieser Temperatur entsprechen, muss dies aber nicht. Das Erhitzen kann in einem offenen oder geschlossenen System stattfinden, bevorzugt unter einer Schutzgasatmosphäre. Das Verfahren kann bei Umgebungsdruck durchgeführt werden, aber auch erhöhtem oder erniedrigtem Druck. Das Erhitzen kann unkatalysiert oder in Gegenwart eines homogenen oder heterogenen Katalysators, beispielsweise einer Säure oder Base, stattfinden. Der Katalysator kann danach deaktiviert oder aus der Siloxan-Mischung entfernt werden, beispielsweise durch Destillation oder Filtration, muss dies aber nicht. Durch geeignete Verfahren, beispielsweise Destillation, können auch Methylpolysiloxane oder Methylpolysiloxan-Gemische wieder entfernt werden. Die Zusammensetzung der erfindungsgemäßen Methylpolysiloxan-Mischung wird dabei durch das Verhältnis der eingesetzten und gegebenenfalls wieder entfernten Mengen von Methylpolysiloxanen Six und Dy, die Temperatur sowie Art (offenes oder geschlossenes System) und Dauer des Erhitzens gesteuert.

Die drei vorstehend beschriebenen Verfahren können auch kombiniert werden. Sie können optional in Gegenwart eines oder mehrerer Lösungsmittel durchgeführt werden. Bevorzugt wird kein Lösungsmittel verwendet. Die eingesetzten Silane, Silan-Gemische, Methylpolysiloxane und Methylpolysiloxan-Gemische sind entweder Standard-Produkte der Silicon-Industrie oder können durch literaturbekannte Synthese-Verfahren hergestellt werden.

Die erfindungsgemäßen Methylpolysiloxan-Mischungen können gelöste oder suspendierte oder emulgierte Zusatzstoffe enthalten, um ihre Stabilität zu erhöhen oder ihre physikalischen Eigenschaften zu beeinflussen. Gelöste Metall-Verbindungen, beispielsweise Eisen-Carboxylate, können als Radikalfänger und Oxidationsinhibitoren die Haltbarkeit eines Wärmeträgers erhöhen. Suspendierte Zusatzstoffe, beispielsweise Kohlenstoff oder Eisenoxid, können physikalische Eigenschaften eines Wärmeträgers, beispielsweise die Wärmekapazität oder die Wärmeleitfähigkeit, verbessern.

Vorzugsweise beträgt in der Methylpolysiloxan-Mischung die Summe der Anteile aller Methylpolysiloxane Six und Dy mindestens 95 Massen-%, besonders mindestens 98 Massen-%, insbesondere mindestens 99,5 Massen-%, bezogen auf die gesamte Mischung.

Die erfindungsgemäße Methylpolysiloxan-Mischung kann als Wärmeträgerfluid verwendet werden, bevorzugt als Wärmeträgerfluid für hohe Temperaturen (HTF), insbesondere in solarthermischen Vorrichtungen, insbesondere in Parabolrinnen- und Fresnel-Kraftwerken. Sie können weiterhin als Wärmeträgerfluid in der chemischen, der pharmazeutischen, der Lebenmittel- sowie der Metallindustrie und als Arbeitsfluide in Wärmekraftmaschinen, insbesondere solarthermischen, verwendet werden. Die Methylpolysiloxan-Mischung wird bevorzugt verwendet bei Temperaturen von 350°C bis 500°C, besonders bevorzugt 380°C bis 450°C, insbesondere 400°C bis 430°C. Bei Temperaturen oberhalb 200°C ist der Einsatz unter einer Schutzgasatmosphäre bevorzugt, um eine oxidative Zersetzung zu verhindern.

### Beispiele

### Äquilibrierung der Methylpolysiloxan-Mischungen:

Unter thermischer Belastung lagern lineare endgestopperte Methylpolysiloxane um (äquilibrieren). Unabhängig von der Ausgangszusammensetzung ergibt sich eine Methylpolysiloxan-Mischung die im thermischen thermodynamischen Gleichgewicht liegt. Die Lage des thermischen Gleichgewichts ergibt sich aus der maximalen Betriebstemperatur, der das Methylpolysiloxan ausgesetzt ist, und des molaren M:D-Verhältnisses (M: Me3SiO_{1/2}-Kettenendgruppen; D: Me₂SiO_{2/2}-Kettenverlängerungseinheiten) der Methylpolysiloxan-Mischung. Um Methylpolysiloxan-Mischungen, die eine zum CSP-Kraftwerksbetrieb vergleichbare Zusammensetzung aufweisen, zu erhalten, wurden jeweils 150 g Methylpolysiloxan-Mischungen mit definiertem molarem M:D-Verhältnis in 250 ml Stahlampullen unter Stickstoffatmosphäre eingewogen, entgast (3 × 20 mbar, jeweils 3 Minuten) und unter Argonatmosphäre (1 bar) verschlossen. Die Stahlampullen wurden anschließend 2 Monate bei 425°C gelagert, um das bei 425°C vorliegende thermodynamische Gleichgewicht der Methylpolysiloxan-Mischungen zu erhalten. Das M zu D-Verhältnis verändert sich dadurch nicht (²⁹Si-NMR). Die molekulare Zusammensetzung der Methylpolysiloxan-Mischungen hingegen schon (Äquilibrierung). Die so erhaltenen Methylpolysiloxan-Mischungen wurden zur weiteren Untersuchung (GPC, GC, Wärmekapazitätsmessung) verwendet.

### Zusammensetzung der Methylpolysiloxan-Mischungen:

### Gelpermeationschromatographie (GPC)

Die Zusammensetzung der Methylpolysiloxan-Mischungen wurde mittels GPC bestimmt. Gerät Iso Pump Agilent 1200, Autosampler Agilent 1200, Säulenofen Agilent 1260 Detektor, RID Agilent 1200, Säule Agilent 300 × 7,5 mm OligoPore Ausschluss 4500D, Säulenmaterial highly crosslinked Polystyrene/Divinylbenzene, Eluent Toluol, Flussrate 0,7 ml/min, Injektionsvolumen 10 µl, Konzentration 1 g/l (in Toluol), PDMS (Polydimethylsiloxan)-Kalibrierung (Mp 28500 D Mp 25200 D, Mp 10500 D, Mp 5100 D, Mp 4160 D, Mp 1110 D, Mp 311D). Auswertung in Flächen-Prozent.

### Gaschromatographie (GC)

Die Zusammensetzung der Methylpolysiloxan-Mischungen wurde mittels GC bestimmt. Gerät Varian GC-3900 Gaschromatograph, Säule VF-200ms 30 m × 0.32 mm × 0.25 pm, Trägergas Helium, Flussrate 1 ml/min, Injektor CP-1177, Split 1:50, Detektor FID 39Xl 250°C. Auswertung in Flächen-Prozent. Kalibrierung hat ergeben, dass die Flächen-Prozent Massen-Prozent entsprechen.

Die Zusammensetzung der Methylpolysiloxan-Mischungen wurde durch Kombination der GPC- und GC-Daten bestimmt. Da Si2 und D3, Si3 und D4, Si4 und D5, Si5 und D6, Si6 und D7, Si7 und D8 und Si8 und D9 im GPC jeweils als ein Peak erscheinen, wurde das Verhältnis der jeweiligen Verbindungen per GC bestimmt und angerechnet. Dadurch ist der Gehalt für Si2-Si8 und D3-D8 bestimmbar. Alle Schwersieder ab Si9 und ab D9 werden zusammen als "Six(x >8) + Dy (y >8)" angegeben. Six sind lineare Methylpolysiloxane, Dy sind cyclische Methylpolysiloxane. Angabe in Flächen-Prozent. Kalibrierung hat ergeben, dass die Flächen-Prozent Massen-Prozent entsprechen.

### Messung des M- zu D-Verhältnisses (²⁹Si-NMR)

Die Bestimmung des Anteils an M- (Kettenenden Me₃Si0_{1/2}-) *und D-Gruppen* (Kettenglieder -Me₂Si0_{2/2}-) erfolgte mittels Kernresonanzspektroskopie (²⁹Si-NMR; Bruker Avance III HD 500 (²⁹Si: 99.4 MHz) Spektrometer mit BBO 500 MHz S2 Probenkopf; inverse gated-Pulssequenz (NS = 3000); 150 mg Methylpolysiloxan-Mischungen in 500 µl einer 4×10⁻² molaren Lösung von Cr(acac)₃ in CD₂Cl₂.

### Wärmekapazität:

Die Wärmekapazität wurde mittels dynamischer Differenzkalorimetrie (DSC) mit dem Gerät SENSYS evo, von SETARAM bestimmt. Die Wärmekapazität wurde mittels Step-Methode in 5-10°C Schritten von 25°C bis 450°C bestimmt. Von der zu untersuchende Methylpolysiloxan-Mischung wurden jeweils 70 mg unter Stickstoffatmosphäre in 160 µl Gold-Tiegel eingewogen. Der sich durch die Erwärmung ausbildende Druck (Eigendruck der Methylpolysiloxan-Mischungen) in den Kapseln wurde nicht detektiert. Die Richtigkeit der Messungen wurde durch Wärmekapazitätsbestimmungen von Saphir bestätigt.

**Tabelle 3: Massenzusammensetzung der Methylpolysiloxan-Mischungen (M:D Verhältnis aus NMR; Si2-Six und D3-Dy-Gehalt über GC/GPC):**

| | | | |
|---|---|---|---|
| M:D = 1:y | 4,00 | 5,80 | 8,99 |
| Si2 | 2,1 | 1,2 | 0,8 |
| D3 | 2,0 | 2,1 | 2,5 |
| Si3 | 3,8 | 2,1 | 1,3 |
| D4 | 10,3 | 11,6 | 12,6 |
| Si4 | 6,0 | 3,4 | 2,1 |
| D5 | 6,2 | 7,7 | 9,0 |
| Si5 | 7,1 | 4,3 | 3,0 |
| D6 | 2,0 | 2,8 | 3,5 |
| Si6 | 6,6 | 4,5 | 3,3 |
| D7 | 0,4 | 0,7 | 1,0 |
| Si7 | 6,0 | 4,3 | 3,3 |
| D8 | 0,1 | 0,2 | 0,3 |
| Si8 | 5,3 | 4,0 | 3,2 |
| Six(x >8) + Dy(y >8 | 42,2 | 51,2 | 54,1 |

**Tabelle 4: Wärmekapazitätsmessungen mit Eingrenzung des kritischen Punktes (Einbruch des Cp-Werts zwischen fett zu normal):**

| T [°C] | Cp M:D = 1:4,00 [kJ/kg*K] | Cp M:D = 1:5,80 [kJ/kg*K] | Cp M:D = 1:8,99 [kJ/kg*K] |
|---|---|---|---|
| 25 | **1,677** | **1,670** | **1,545** |
| 50 | **1,722** | **1,711** | **1,613** |
| 100 | **1,811** | **1,795** | **1,740** |
| 150 | **1,899** | **1,878** | **1,856** |
| 200 | **1,988** | **1,962** | **1,960** |
| 250 | **2,077** | **2,045** | **2,053** |
| 300 | **2,166** | **2,129** | **2,134** |
| 350 | **2,255** | **2,212** | **2,203** |
| 360 | **2,272** | **2,229** | **2,216** |
| 370 | **2,290** | **2,246** | **2,228** |
| 380 | **2,308** | **2,262** | **2,239** |
| 385 | **2,317** | **2,271** | **2,245** |
| 390 | **2,326** | **2,279** | **2,250** |
| 395 | **2,335** | **2,287** | **2,256** |
| 400 | **2,343** | **2,296** | **2,261** |
| 405 | 2,152 | **2,304** | **2,266** |
| 410 | 2,160 | **2,312** | **2,271** |
| 415 | 2,168 | **2,321** | **2,276** |
| 420 | 2,175 | **2,329** | **2,281** |
| 425 | 2,183 | **2,337** | **2,285** |
| 430 | 2,191 | 2,201 | **2,289** |
| 435 | 2,199 | 2,204 | 2,201 |
| 440 | 2,206 | 2,208 | 2,208 |
| 445 | 2,214 | 2,211 | 2,214 |
| 450 | 2,222 | 2,214 | 2,221 |

Die Beispiele zeigen, dass der Übergang in die überkritische Phase bei einem molaren M:D-Verhältnis von 1:4,00 schon vor der angestrebten Betriebstemperatur von 425°C geschieht. Bei einem molaren M:D-Verhältnis von 1:5,80 bis 1:8,99 zeigt sich, dass der Übergang in die überkritische Phase erst oberhalb von 425°C erfolgt.

## Patentansprüche

1. Methylpolysiloxan-Mischung, die Methylpolysiloxane mit Me₃Si-Kettenendgruppen (M) und Me₂SiO-Einheiten (D) aufweist, wobei das molare M:D-Verhältnis in der Methylpolysiloxan-Mischung 1:5,5 bis 1:15 beträgt und die Summe der Anteile aller cyclischen Methylpolysiloxane 25 bis 55 Massen-% beträgt.

2. Mischung nach Anspruch 1, bei der 35 bis 65 Massen-% der Methylpolysiloxane in der Methylpolysiloxan-Mischung ausgewählt werden aus Methylpolysiloxanen Six mit x>8 und Dy mit y>8.

3. Mischung nach einem oder mehreren der vorangehenden Ansprüche, bei welcher der mit den Massenanteilen gewichtete arithmetische Mittelwert von x über alle linearen Methylpolysiloxane (Six) von Si2 bis Si22 2,3 bis 3,6 beträgt.

4. Mischung nach einem oder mehreren der vorangehenden Ansprüche, bei welcher der mit den Massenanteilen gewichtete arithmetische Mittelwert von y über alle cyclischen Methylpolysiloxane (Siy) von D3 bis D17 1,7 bis 3,5 beträgt.

5. Mischung nach einem oder mehreren der vorangehenden Ansprüche, bei der die Viskosität bei 25°C unter 50 mPa*s ist.

6. Mischung nach einem oder mehreren der vorangehenden Ansprüche, welche eine bimodale, trimodale oder multimodale Molmassenverteilung aufweist.

7. Verwendung der Mischung nach Anspruch 1 bis 6 als Wärmeträgerfluid.

8. Verwendung nach Anspruch 7 für solarthermische Vorrichtungen.

9. Verwendung nach Anspruch 7 oder 8 bei Temperaturen von 350°C bis 500°C.

## Claims

1. Methylpolysiloxane mixture, comprising methylpolysiloxanes having Me₃Si chain end groups (M) und Me₂SiO units (D), wherein the molar M:D ratio in the methylpolysiloxane mixture is from 1:5.5 to 1:15 and the sum total of the proportions of all cyclic methylpolysiloxanes is 25 to 55% by mass.

2. Mixture according to Claim 1, in which 35 to 65% by mass of the methylpolysiloxanes in the methylpolysiloxane mixture are selected from methylpolysiloxanes Six where x>8 and Dy where y>8.

3. Mixture according to one or more of the preceding claims, in which the arithmetic mean of x, weighted by the proportions by mass, over all linear methylpolysiloxanes (Six) from Si2 to Si22 is 2.3 to 3.6.

4. Mixture according to one or more of the preceding claims, in which the arithmetic mean of y, weighted by the proportions by mass, over all cyclic methylpolysiloxanes (Siy) from D3 to D17 is 1.7 to 3.5.

5. Mixture according to one or more of the preceding claims, in which the viscosity at 25°C is below 50 mPa*s.

6. Mixture according to one or more of the preceding claims, having a bimodal, trimodal or multimodal molar mass distribution.

7. Use of the mixture according to Claims 1 to 6 as heat transfer fluid.

8. Use according to Claim 7 for solar thermal devices.

9. Use according to Claim 7 or 8 at temperatures of 350°C to 500°C.

## Revendications

1. Mélange de méthylpolysiloxanes, qui présente des méthylpolysiloxanes pourvus de groupes terminaux de chaîne Me₃Si (M) et de motifs Me₂SiO (D), le rapport molaire M:D dans le mélange de méthylpolysiloxanes valant 1:5,5 à 1:15 et la somme des proportions de tous les méthylpolysiloxanes cycliques valant 25 à 55% en masse.

2. Mélange selon la revendication 1, pour lequel 35 à 65% en masse des méthylpolysiloxanes dans le mélange de méthylpolysiloxanes sont choisis parmi les méthylpolysiloxanes Six avec x > 8 et Dy avec y > 8.

3. Mélange selon l'une ou plusieurs des revendications précédentes, pour lequel la valeur moyenne arithmétique pondérée par les proportions massiques de x sur tous les méthylpolysiloxanes linéaires (Six) de Si2 à Si22 vaut 2,3 à 3,6.

4. Mélange selon l'une ou plusieurs des revendications précédentes, pour lequel la valeur moyenne arithmétique pondérée par les proportions massiques de y sur tous les méthylpolysiloxanes cycliques (Siy) de D3 à D17 vaut 1,7 à 3,5.

5. Mélange selon l'une ou plusieurs des revendications précédentes, pour lequel la viscosité à 25°C est inférieure à 50 mPa.s.

6. Mélange selon l'une ou plusieurs des revendications précédentes, qui présente une répartition bimodale, trimodale ou multimodale des masses molaires.

7. Utilisation du mélange selon la revendication 1 à 6 comme fluide caloporteur.

8. Utilisation selon la revendication 7 pour des dispositifs thermiques solaires.

9. Utilisation selon la revendication 7 ou 8 à des températures de 350°C à 500°C.
